(19) Europäisches Patentamt

European Patent Office

Office européen des brevets

(11) **EP 3 864 544 B1**

(12) **EUROPEAN PATENT SPECIFICATION**

(45) Date of publication and mention
of the grant of the patent:
**20.09.2023 Bulletin 2023/38**

(21) Application number: **19871470.1**

(22) Date of filing: **01.10.2019**

(51) International Patent Classification (IPC):
**G06F 21/50** *(2013.01)*     **G06F 11/30** *(2006.01)*
**G05B 23/02** *(2006.01)*     **G06F 11/07** *(2006.01)*
**G06F 11/28** *(2006.01)*     **G06F 21/52** *(2013.01)*

(52) Cooperative Patent Classification (CPC):
**G05B 23/0235; G06F 11/0739; G06F 11/0751;**
**G06F 11/28; G06F 21/52;** G06F 11/0769;
G06F 11/0793; G06F 2201/83

(86) International application number:
**PCT/US2019/054025**

(87) International publication number:
**WO 2020/076555 (16.04.2020 Gazette 2020/16)**

(54) **EXECUTION SEQUENCE INTEGRITY MONITORING SYSTEM**

SYSTEM ZUR ÜBERWACHUNG DER INTEGRITÄT EINER AUSFÜHRUNGSSEQUENZ

SYSTÈME DE SURVEILLANCE D'INTÉGRITÉ DE SÉQUENCE D'EXÉCUTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.10.2018   US 201816155199**
**09.10.2018   US 201816155229**

(43) Date of publication of application:
**18.08.2021   Bulletin 2021/33**

(73) Proprietor: **Argo AI, LLC**
**Pittsburgh, PA 15222 (US)**

(72) Inventor: **HU, Ching, Yee**
**San Jose, CA 95135 (US)**

(74) Representative: **Hofstetter, Schurack & Partner**
**Patent- und Rechtsanwaltskanzlei**
**PartG mbB**
**Balanstrasse 57**
**81541 München (DE)**

(56) References cited:
**FR-A1- 2 841 015      US-A1- 2008 215 920**
**US-A1- 2011 047 200      US-A1- 2013 080 843**

• **LARDENNOIS R ED - PULKA ANDRZEJ ET AL:**
**"USING MODULA-2 FOR SAFETY-CRITICAL**
**CONTROL IN AN URBAN TRANSPORTATION**
**SYSTEM", MICROPROCESSORS AND**
**MICROSYSTEMS, IPC BUSINESS PRESS LTD.**
**LONDON, GB, vol. 14, no. 3, 1 April 1990**
**(1990-04-01), pages 177-180, XP000126147, ISSN:**
**0141-9331, DOI: 10.1016/0141-9331(90)90070-C**

**Description**

RELATED APPLICATIONS AND CLAIM OF PRIORITY

This patent document claims priority to: (1) United States Patent Application Number 16/155,199, filed October 9, 2018; and (2) United States Patent Application Number 16/155,229, filed October 9, 2018.

BACKGROUND

This disclosure relates to a monitoring system that verifies the execution sequence of functions of an execution flow, such as one implemented by an automated device. Faults during execution of programming instructions can impact not only the function being performed but also the overall security of the system. Faults can result from innocuous behaviors, such as, for example, making a change in a module that has an unintended impact on a connected module. However, faults may also result from malicious behavior such as, for instance, deliberate tampering, cyberattacks, or hacking.

While embedding security protocols or security monitors within a software program may help identify faults, such protocols and monitors often impact performance of the software and cause latency issues. Document US 2013 / 080843 A1 discloses a method for detecting data corruption in medical binary decision diagrams using hashing techniques. An analysis system receives a BDD (binary decision diagram) representing one or more data streams from one or more sensors, together with a first hash code, wherein the first hash code is generated at the sending system by performing an arithmetic transformation on the BDD to transform the BDD to a first arithmetic function and calculating the first hash code. The analysis system transforms the received BDD to a second arithmetic function by performing the arithmetic transformation on the received BDD. The analysis system calculates a second hash code from the second arithmetic function and determines if the first hash code equal the second hash code. Document US 2011 / 047200 A1 discloses a method of validating a succession of events in the life of a device relative to a predefined succession of events. Document US 2008 / 215920 A1 relates to computer software, and more specifically in one embodiment to use of a signature to enhance program code trace capability. A processor generates a signature value indicating a sequence of executed instructions, and the signature value is compared to signature values calculated for two or more possible sequences of executed instructions to determine which instruction sequence was executed. The signature is generated via a signature generator during program execution, and is provided external to the processor via a signature message. Document FR 2 841 015 A1 discloses a method for controlling the execution of a program implementing successive instructions each comprising at least the execution of an operator (OPEj). Lardennois et al. (LARDENNOIS R ED - PLTLKA ANDREZEJ ET AL: "Using Modula-2 for safety-critical control in an urban transportation system", Microprocessors and microsystems, ipc business press LTD. London, GB, vol. 14, no. 3, 1 April 2919 (1990-04-01), pages 177-180) disclose the use of MODULA-2 for the development of safety-critical applications.

SUMMARY

The present invention is defined by the independent claims. Advantageous embodiments are described in the dependent claims, the following description and the drawings. In an embodiment, a method of verifying execution sequence integrity of an execution flow includes receiving, by a local monitor of an automated device monitoring system from one or more sensors of an automated device, a unique identifier for each function in a subset of an execution flow for which the local monitor is responsible for monitoring. The subset includes fewer than all of the functions in the execution flow, and the execution flow represents a sequence of functions pertaining to an operation of the automated device. The method includes combining the received unique identifiers to generate a combination value, applying a hashing algorithm to the combination value to generate a temporary hash value, retrieving, from a data store, a true hash value, determining whether the temporary hash value matches the true hash value, and in response to the temporary hash value not matching the true hash value, generating a fault notification. The true hash value represents a result of applying the hashing algorithm to a combination of actual unique identifiers associated with each function in the subset.

In various embodiments, combining the received unique identifiers may involve concatenating the received unique identifiers. Concatenating the received unique identifiers may include concatenating the received identifiers in an order corresponding to an order of the functions in the sequence.

In various embodiments, the data store may be located remotely from the local monitor.

In various embodiments, generating a fault notification comprises halting the operation of the automated device.

In various embodiments, the method may include sending the temporary hash value to a global monitor of the automated device monitoring system, wherein the global monitor is configured to monitor all of the functions in the execution flow.

In an embodiment, a method of verifying execution sequence integrity of an execution flow includes receiving, by a local monitor of an automated device monitoring system from a sensor of an automated device, a first unique identifier for a first function in a subset of an execution flow for which the local monitor is responsible for monitoring. The subset includes fewer than all of the functions in the execution flow, and the execution flow represents a sequence of functions pertaining to an operation of the automated device. The method includes applying a hashing algorithm to the first unique identifier to generate a first hash value, retrieving, from a data store, a true first hash value, and, in response to the true first hash value matching the first hash value, receiving, by the local monitor, a second unique identifier for a second function in the subset, where the second function immediately follows the first function in the sequence, combining the first hash value and the second unique identifier to generate a combined value, applying the hashing algorithm to the combined value to generate a combined hash value, retrieving, from the data store, a true combined hash value representing a result of applying the hashing algorithm to a combination of the true first hash value and a true second unique identifier for the second function, and in response to the combined hash value not matching the true combined hash value, generating a fault notification. The true first hash value represents a result of applying the hashing algorithm to an actual unique identifier associated with the first function.

In various embodiments, combining the first hash value and the second unique identifier to generate a combined value includes concatenating the first hash value and the second unique identifier. The true combined hash value may represent a result of applying the hashing algorithm to a concatenation of the true first hash value and a true second unique identifier for the second function.

In various embodiments, the method may include sending the first hash value to a global monitor of the automated device monitoring system, where the global monitor is configured to monitor all of the functions in the execution flow.

In various embodiments, the method may include sending the combined hash value to a global monitor of the automated device monitoring system, where the global monitor is configured to monitor all of the functions in the execution flow.

In various embodiments, generating a fault notification may include halting the operation of the automated device.

In an embodiment, a method of verifying execution sequence integrity of an execution flow includes receiving, by a local monitor of an automated device monitoring system from one or more sensors of an automated device, a plurality of unique identifiers for a sequence of functions of an execution flow for which the local monitor is responsible for monitoring, where the execution flow represents an operation of the automated device. The method includes applying a hashing algorithm to a first unique identifier that corresponds to a first function in the sequence to generate a first hash value, retrieving, from a data store, a true first hash value, where the true first hash value represents a result of applying the hashing algorithm to an actual unique identifier associated with the first function, and in response to the true first hash value matching the first hash value, for each of the other functions in the sequence, recursively applying the hashing algorithm to a combination of the unique identifier associated with the function and a hash value associated with a function in the sequence that immediately precedes the function to generate a temporary hash value, and generating a fault notification if the temporary hash value does not match a true hash value. The true hash value represents a result of applying hashing algorithm to a true unique identifier associated with the function and a true hash value associated with the function in the sequence that immediately precedes the function. Optionally, generating a fault notification may include halting the operation of the automated device.

In an embodiment, a method of verifying execution sequence integrity of a data path includes receiving, by a monitor of an automated device monitoring system from one or more sensors of an automated device, a plurality of unique identifiers for a sequence of nodes of a data path for which the monitor is responsible for monitoring. The sequence of nodes is configured to process one or more commands for the automated device. The method includes applying a hashing algorithm to a first unique identifier that corresponds to a first node in the sequence to generate a first hash value, retrieving, from a data store, a true first hash value, where the true first hash value represents a result of applying the hashing algorithm to an actual unique identifier associated with the first node, and in response to the true first hash value matching the first hash value, for each of the other nodes in the sequence, recursively applying the hashing algorithm to a combination of the unique identifier associated with the function and a hash value associated with a node in the sequence that immediately precedes the node to generate a temporary hash value, and generating a fault notification if the temporary hash value does not match a true hash value. The true hash value represents a result of applying hashing algorithm to a true unique identifier associated with the node and a true hash value associated with the node in the sequence that immediately precedes the node.

In an embodiment, one or more systems for performing methods described in this disclosure may include a monitor of an automated device monitoring system that is in communication with one or more sensors of an automated device, and a computer-readable storage medium that includes one or more programming instructions that, when executed, causes the monitor to perform one or more actions, such as, for example, one or more verification methods as described in this disclosure.

In an embodiment, a system of verifying execution sequence integrity of an execution flow includes a monitoring system in communication with one or more sensors of a system being monitored by the monitoring system, where the monitoring system includes one or more electronic devices, and a computer-readable storage medium having one or more programming instructions. When executed, the one or more programming instructions cause at least one of the electronic devices to receive from one or more of the sensors, a parameter value for each of one or more parameters that pertain to an operational state of the system, combine the received parameters to generate a combination value, apply a hashing algorithm to the combination value to generate an encoded combination value, search a data store for a return code associated with the encoded combination value, and in response to the return code associated with the encoded combination value indicating that the encoded combination value is incorrect, generate a fault notification.

According to the invention, the system combines the received parameters to generate a combination value by causing the at least one of the electronic devices to concatenate the received parameter values.

In an embodiment of the system, the one or more sensors may include one or more of the following: an image sensor, a radar sensor, a lidar sensor, an audio sensor, an optics sensor, an inertial measurement unit, a gyroscope, an accelerometer, or a geolocation sensor. The one or more sensors may be sensors of an automated device. Each parameter value may represent a measurement obtained from the one or more sensors during operation of the automated device.

According to the invention, the system causes the at least one of the electronic devices to generate a fault notification by causing the at least one of the electronic devices to halt operation of the automated device. The automated device may be an autonomous vehicle.

In various embodiments of the system, the system may cause the at least one of the electronic devices to send the temporary hash value to a global monitor of the monitoring system, where the global monitor is configured to monitor all of the sensors of the system.

BRIEF DESCRIPTION OF THE DRAWINGS

FIG. 1 illustrates an example monitoring system for an automated device.
FIG. 2 illustrates an example method of verifying execution sequence integrity of an execution flow.
FIG. 3 illustrates an example method of verifying execution sequence integrity of an execution flow.
FIG. 4 illustrates an example method of verifying execution sequence integrity of a data path.
FIG. 5 illustrates an example method of verifying execution sequence integrity of an execution flow by using various parameter values.
FIG. 6 is a block diagram of elements of a computing device on which the various systems and methods in this document could be implemented.

DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to."

An "automated device" refers to an electronic device that performs at least some operations or tasks with minimal or no human intervention. For example, an automated device may perform one or more automatic functions or function sets. Examples of such operations, functions or tasks may include without, limitation, navigation, transportation, driving, delivering, loading, unloading, medical-related processes, construction-related processes, and/or the like. Example automated devices may include, without limitation, autonomous vehicles, drones, autonomous robotic devices, and/or the like.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions. Examples of electronic devices include personal computers, servers, mainframes, virtual machines, containers, vehicle diagnostic or monitoring systems, other vehicle electronic and/or computing systems, and mobile electronic devices such as smartphones, personal digital assistants, cameras, tablet computers, laptop computers, media players and the like. In a client-server arrangement, the client device and the server are electronic devices, in which the server contains instructions and/or data that the client device accesses via one or more communications links in one or more communications networks. The server may be a single device or a collection of devices that are distributed but via which share processing devices and/or memory are shared. In a virtual machine arrangement, a server may be an electronic device, and each virtual machine or container may also be considered to be an electronic device. In the discussion below, a client device, server device, virtual machine or container may be referred to simply as a "device" for brevity.

In this document, the terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

In this document, the terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

An execution flow refers to a sequence of functions that are to be performed in a particular order. A function refers to one or more operational instructions that cause a system to perform one or more actions. In various embodiments, an execution flow may pertain to the operation of an automated device. For example, with respect to an autonomous vehicle, a particular execution flow may be executed by the vehicle in a certain situation such as, for example, when the vehicle is stopped at a red stop light that has just turned green. For instance, this execution flow may include the functions of determining that the light is green, determining whether there are any obstacles in front of or in proximity to the vehicle and, only if the light is green and no obstacles exist, accelerating.

Failing to perform a function in an execution flow, or performing a function out of order in sequence may indicate that a fault has occurred or that another issue exists with respect to the execution flow.

An automated device monitoring system is a set of hardware that is communicatively and/or electrically connected to various components (such as sensors) of an automated device to collect status or operational parameter values from those components. An automated device monitoring system may include or be connected to a data logging device that includes a data input (such as a wireless receiver) that is configured to receive device operation data directly or indirectly from the device's components. The monitoring system also may include a processor, a transmitter and a memory with programming instructions. A monitoring system may include a transmitter for transmitting commands and/or data to external electronic devices and/or remote servers. In various embodiments, a monitoring system may be embedded or integral with the automated device's other computing system components, or it may be a separate device that is in communication with one or more other local systems, such as, for example in the context of an autonomous vehicle, and on-board diagnostics system.

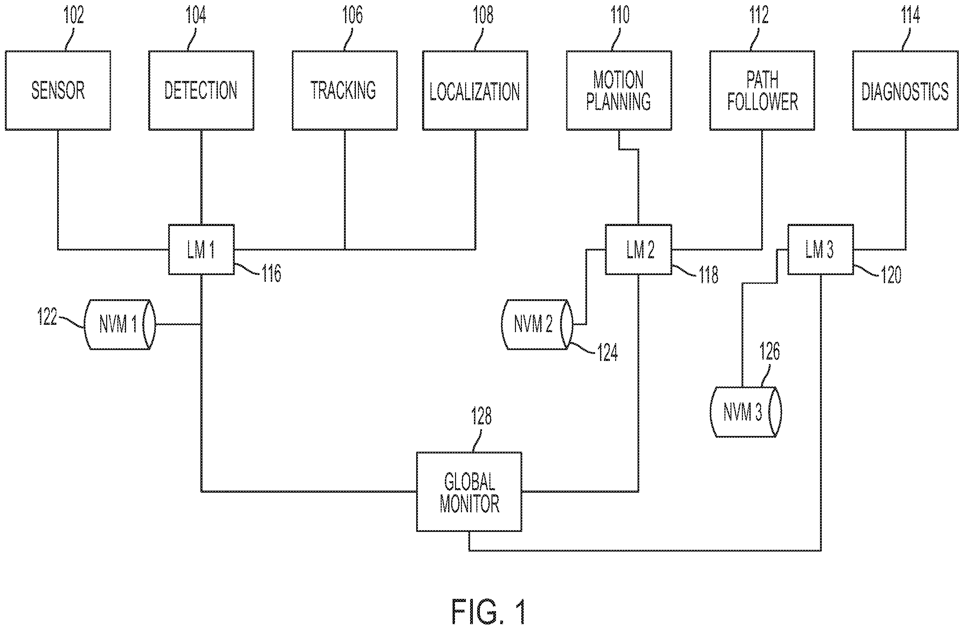

FIG. 1 illustrates an example monitoring system for an automated device system according to an embodiment. As illustrated by FIG. 1, a monitoring system may include one or more subsystems that are responsible for performing one or more types of tasks or functions. For example, FIG. 1 illustrates a monitoring system **100** with a sensor subsystem **102,** a detection subsystem **104,** a tracking subsystem **106,** a localization subsystem **108,** a motion planning subsystem **110,** a path follower subsystem **112** and a diagnostics subsystem **114.**

As illustrated in FIG. 1, the subsystems may be in communication with a local monitor **116, 118, 120.** A local monitor **116, 118, 120** may be implemented using hardware, software or a combination of hardware. For instance, a local monitor **116, 118, 120** may be implemented as part of a microcontroller. A local monitor **116, 118, 120** may include one or more of a register or data store for temporarily storing data, a comparator for comparing data, programmed circuitry for performing one or more cryptographic operations and/or the like. A local monitor **116, 118, 120** may receive data pertaining to one or more functions executed by a subsystem, and may use this information to verify at least a portion of the execution flow to which the function(s) pertain as explained in more detail below.

FIG. 1 also illustrates example non-volatile memory (NVM) **122, 124, 126,** which may be used to store information, as discussed in more detail throughout this disclosure. In various embodiments, an NVM **122, 124, 126** may include a master hash table. A master hash table refers to a data structure that stores encrypted and/or encoded information associated with one or more functions, as discussed in more detail below.

As shown in FIG. 1, a monitoring system **100** may include a global monitor **128.** A global monitor **128** may be implemented using hardware, software or a combination of hardware. For instance, a global monitor **128** may be implemented as part of a microcontroller. A global monitor **128** may include one or more of a register or data store for temporarily storing data, a comparator for comparing data, programmed circuitry for performing one or more cryptographic operations and/or the like. A global monitor **128** may be in communication with one or more of the local monitors **116, 118, 120.** As explained in more detail below, local monitors **116, 118, 120** may send to a global monitor **128** information pertaining to functions or tasks executed by one or more of their associated subsystems. The global monitor **128** may use this information to monitor, detect or track patterns at a higher system level. In other words, a local monitor **116, 118, 120** may detect faults or anomalies at a local level, while a global monitor **128** may detect system level faults over a period of time. In various embodiments, a global monitor **128** may be in communication with a diagnostics system (not shown).

It is understood that additional or alternate subsystems, along with additional or fewer local monitors, NVMs and/or configurations of each may be used within the scope of this disclosure.

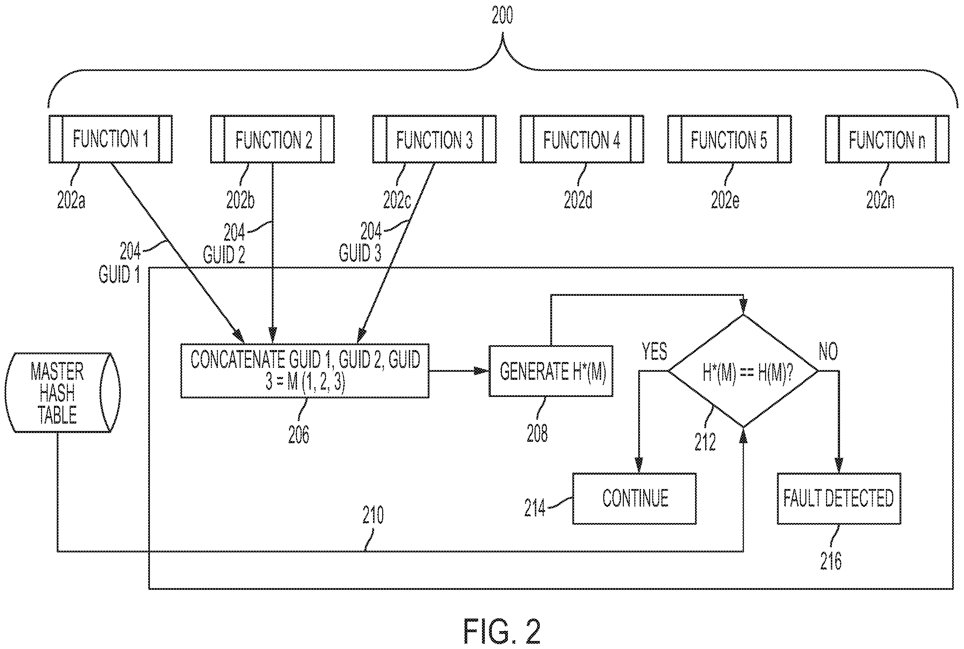

FIG. 2 illustrates an example method of verifying execution sequence integrity of an execution flow according to an embodiment. As illustrated by FIG. 2, an execution sequence **200** may include a sequence of functions - {Function 1, Function 2,..., Function *n*} **202a-202n**. In various embodiments, each function may be associated with a unique identifier such as, for example, a globally unique identifier (GUID), a universally unique identifier (UUID), and/or the like. A unique identifier for a function may be assigned to a function during design of an execution flow.

As illustrated by FIG. 2, local monitor may receive **204** a unique identifier from one or more functions (Function 1 **202a**, Function 2 **202b** and Function 3 **202c**) in an execution flow at run time. For instance, a function may send its unique identifier to a local monitor that is responsible for monitoring the function at runtime of the function.

In various embodiments, a local monitor may receive **204** unique identifiers from only a subset of functions in an execution flow. For instance, two or more local monitors may share responsibility for monitoring execution of an entire execution flow - one local monitor may be responsible for monitoring a certain subset of functions in the execution flow, while one or more other local monitors may be responsible for monitoring one or more other subsets of functions in the execution flow. Dividing responsibility for monitoring functions in an execution flow between two or more local monitors may improve efficiency of the monitoring process and therefore reduce latency. In other embodiments, a single local monitor may monitor all of the functions in an execution flow. As illustrated in FIG. 2, the local monitor receives GUID 1 from Function 1, GUID 2 from Function 2 and GUID from Function 3.

A local monitor may combine **206** the received unique identifiers to generate a combination value. The combination value may be a string of the combined received unique identifiers. For example, the local monitor may concatenate the received unique identifiers into a single string represented in FIG. 2 as M(1, 2, 3). In various embodiments, the unique identifiers may be combined in an order corresponding to the order of their corresponding functions in the execution flow sequence. For example, referring to FIG. 2, the unique identifiers may be concatenated as GUID 1 + GUID 2 + GUID 3 as this corresponds to the order of their corresponding functions **202a, 202b, 202c** in the execution flow **202.**

A local monitor may apply **208** a cryptographic operation on the combination value to generate a temporary hash value. A cryptographic operation may include a hashing algorithm, an encoding algorithm, an encryption algorithm and/or the like. For instance, an SHA-256 cryptographic hash algorithm may be used. As illustrated in FIG. 2, the temporary hash value of the concatenation value (M(1, 2, 3)) is represented as H*(M). In various embodiments, a local monitor may send the temporary hash value to a global monitor for further analysis and/or processing.

A local monitor may retrieve **210** a true hash value for the combination value. A true hash value may represent a resulting of applying the cryptographic operation to a combination of the actual unique identifiers associated with each function for which unique identifiers are received. For instance, with respect to FIG. 2, a true hash value for the concatenation of GUID 1, GUID 2 and GUID 3 may be the result of applying the cryptographic operation to the actual unique identifiers associated with Function 1, Function 2 and Function 3.

In various embodiments, a local monitor may retrieve **210** a true hash value from a master hash table of a data store. For instance, a master hash table may be stored in an NVM that is located remotely from the local monitor. Alternatively, a master hash table may be stored in an NVM of the local monitor. The master hash table may only be read by one or more local monitors, and the contents of the master hash table may be protected for integrity, authenticity, confidentiality, availability, authorization and/or tamper detection.

The local monitor may determine **212** whether the temporary hash value matches the true hash value. If it does, then the function sequence has been preserved and has not been altered. In this case, the local monitor may proceed **214** to examine a next set of functions. If the local monitor determines **212** that the temporary hash value does not match the true hash value, the local monitor may generate **216** a fault notification.

In an embodiment, a fault notification may be an alert, an email or other notification alerting a system user, such as an administrator, that a fault was detected with the execution flow. For example, a local monitor may cause an alert in the form of a graphical user interface element to be displayed to a user via a display device. In another embodiment, generating **216** a fault notification may include causing a system to perform an action or refrain from performing one or more actions. For instance, generating **216** a fault notification may involve halting the operation of an automated device.

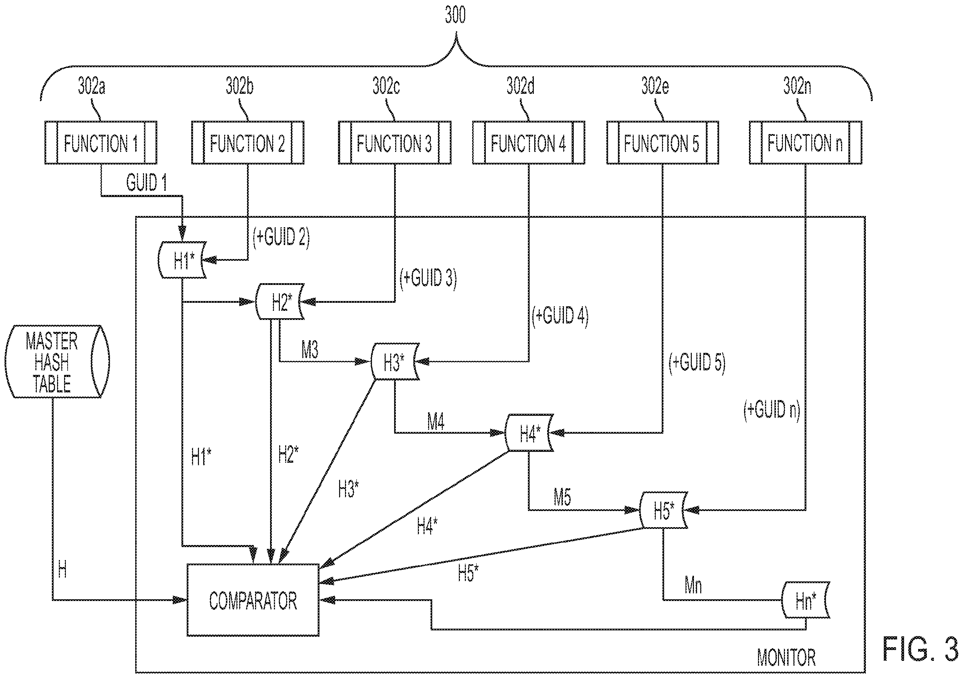

FIG. 3 illustrates another method of verifying execution sequence integrity of an execution flow according to an embodiment. As illustrated by FIG. 3, an execution sequence **300** may include a sequence of functions - {Function 1, Function 2,..., Function *n*} **302a-302n**. In various embodiments, each function may be associated with a unique identifier such as, for example, a globally unique identifier (GUID), a universally unique identifier (UUID), and/or the like. A unique identifier for a function may be assigned to a function during design of a workflow.

As illustrated in FIG. 3, a monitor may receive a unique identifier from the first function in an execution flow. The monitor may be a local monitor or it may be a global monitor. A variable representing the current function may be set to indicate Function 1. The monitor may apply **306** a cryptographic operation on the unique identifier to generate an encoded value. For example, a monitor may apply a hashing algorithm to a unique identifier to generate a hash value.

A monitor may retrieve a true encoded value associated with the first function. A true encoded value may represent a result of applying the cryptographic operation to an actual unique identifier associated with the first function. In various embodiments, a monitor may retrieve **308** a true encoded value for the first function (or one or more other functions) from a data store, such as, for example, a master hash table.

The monitor may compare the generated encoded value for the first function to the retrieved true encoded value for the first function. If the values do not match, then the monitor may generate a fault notification. If the values do match, the monitor may update the current function variable to indicate the next function in the execution flow. The monitor may receive a unique identifier associated with the now current function in the execution flow. For example, referring to FIG. 3, a monitor may receive a unique identifier (GUID 2) associated with Function 2.

The monitor may combine the received unique identifier associated with the now current function in the execution flow with the generated encoded value associated with the function that preceded the now current function. For example, referring to FIG. 3, the monitor may combine H1* with GUID 2 to generate a combined value M2. In various embodiments, a monitor may combine values by concatenating them. A monitor may apply a cryptographic operation to the combined value to generate an encoded combined value. The monitor may retrieve from a data store a true encoded combined value representing the result of applying the cryptographic operation to a combination of the encoded value associated with the function that preceded the now current function and the unique identifier associated with the current function. If the values do not match, then the monitor may generate a fault notification. If the values do match, the monitor may update the current function variable to indicate the next function in the execution flow, and continue this process for one or more remaining functions in the execution flow.

In other words, a monitor may, for one or more remaining functions in an execution flow, recursively apply a cryptographic operation to the unique identifier associated with a current function and an encoded value associated with the function that immediately precedes the current function in the execution flow to generate an encoded value for the current function. The monitor may compare the computed values to true values retrieved from a data store to confirm that they match. If they do, the monitor may continue its process until all of the functions in the execution flow have been examined. If they do not, the monitor may generate a fault notification.

Although FIG. 2 and FIG. 3 depict methods of verifying execution sequence integrity of an execution flow, it is understood that these methods may be applied to verify the performance of various other sequences such as, for example, data paths, authorized channels and/or the like. For instance, in certain systems, only authorized sources may be permitted to send commands through a channel or data path to be executed. A channel or data path may include one or more nodes, where each node is a program, a function, a hardware component, a data structure and/or the like. In an automated device system, a data path may include a sequence of various automated device sensors according to various embodiments.

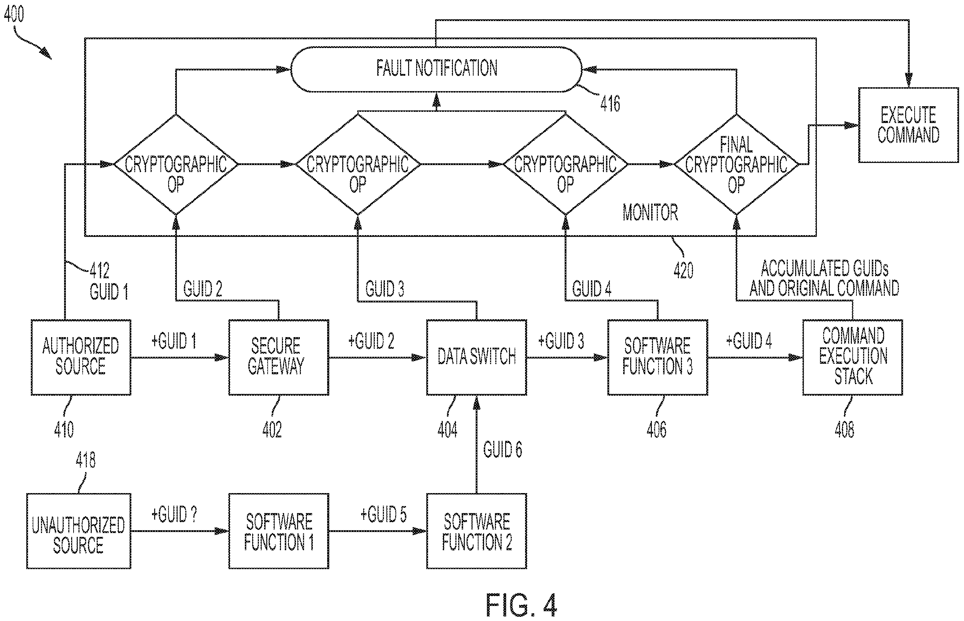

FIG. 4 illustrates an example data path 400. As illustrated in FIG. 4, the data path 400 includes nodes such as a secure gateway 402, a data switch 404, a software function 406, and an authorized source 410. Additional and/or alternate nodes may be used within the scope of this disclosure. The data path may include a command execution stack 408. Only an authorized source 410 is permitted to send commands through the data path for inclusion in the execution stack 408. In the context of automated devices, an example command may be "change system into service mode from autonomous mode." One or more of the nodes 402, 404, 406, 410 may append a unique identifier that uniquely identifies the node to the command as it passes through the data path. As illustrated by FIG. 4, the system may verify the integrity of the data path for one or more nodes in the path in a manner similar to that explained above with respect to FIG. 3.

For example, as illustrated by FIG. 4, a monitor 420 (local monitor or global monitor) may receive 412 a unique identifier from the authorized source 410. A variable representing the current nodes in a data path may be set to indicate the authorized source 410. The monitor may apply 414 a cryptographic operation to the unique identifier to generate an encoded value. For example, a monitor may apply a hashing algorithm to a unique identifier to generate a hash value.

A monitor may retrieve a true encoded value associated with the authorized source. A true encoded value may represent a result of applying the cryptographic operation to an actual unique identifier associated with the authorized source. In various embodiments, a monitor may retrieve a true encoded value for the authorized source (or one or more nodes) from a data store, such as, for example, a master hash table.

The monitor may compare the generated encoded value for the authorized source to the retrieved true encoded value for the first function. If the values do not match, then the monitor may generate 416 a fault notification. If the values do match, the monitor may update the current variable to indicate the next node in the data path. The monitor may receive a unique identifier associated with the now current node in the data path. For example, referring to FIG. 4, a monitor may receive a unique identifier (GUID 2) associated with a secure gateway 402.

The monitor may combine the received unique identifier associated with the now current node in the data path with the generated encoded value associated with the node that preceded the now current node. In various embodiments, a monitor may combine values by concatenating them. A monitor may apply a cryptographic operation to the combined value to generate an encoded combined value. The monitor may retrieve from a data store a true encoded combined value representing the result of applying the cryptographic operation to a combination of the encoded value associated with the node that preceded the now current node and the unique identifier associated with the current node. If the values do not match, then the monitor may generate a fault notification. If the values do match, the monitor may update the current node variable to indicate the next node in the data path, and continue this process for one or more remaining nodes in the data path.

As illustrated in FIG. 4, an unauthorized source **418** that attempts to propagate an unauthorized command through a data path will have the incorrect cryptographic operation collected along the data path and, as such, will not be able to execute the unauthorized command.

In the invention, a monitor performs a method of verifying execution sequence integrity of an execution flow by using various parameter values. In the invention, one or more sensors of a system that is being monitored, such as, for example, an automated device, may measure or otherwise obtain one or more parameter values that pertain to an operational state of the system. In the invention the automated device is an autonomous vehicle. Examples of sensors of an automated device system may include, without limitation, an image sensor, a radar sensor, a lidar sensor, an audio sensor, an optics sensor, an inertial measurement unit (IMU), a gyroscope, an accelerometer, a geolocation sensor, and/or the like.

With respect to an autonomous vehicle, a scenario may be as follows: An autonomous vehicle is stopped at an intersection, and the traffic light has just turned from Red to Green. However, there are still a few pedestrians in the crosswalk, which is part of the autonomous vehicle's planned corridor. The correct action for the autonomous vehicle to take in this situation is to wait for the pedestrians to clear the corridor and then increase its velocity. The wrong action for the autonomous vehicle to take is to increase its velocity before the pedestrians clear the corridor. Table 1 illustrates example parameters that may be obtained from one or more autonomous vehicle sensors, and that are associated with this operational state of the system.

**Table 1**

| Parameter | Parameter value |
|---|---|
| Traffic light state | GREEN |
| Current AV velocity | 0 |
| Pending motion planning action | Velocity = 25 mph |
| Is corridor cleared? | NO |
| AV motion control action | Velocity = 0 |

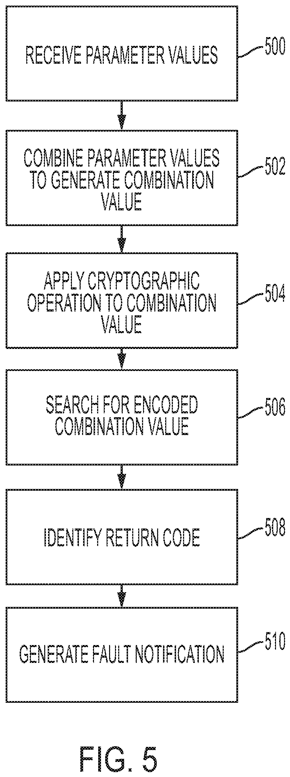

FIG. 5 illustrates an example method of verifying execution sequence integrity of an execution flow by using various parameter values according to an embodiment. As illustrated by FIG. 5, a monitor, such as a local monitor or a global monitor, may receive **500** one or more parameter values from one or more sensors of a system. The parameter values may correspond to parameters associated with a particular operational state of the system.

The monitor combines **502** the received parameter values to generate a combination value. For example, the monitor may concatenate the received parameter values to generate a concatenation value. The monitor may combine the parameter values in specific sequence. For example, the parameter values illustrated in Table 1 may be combined into a string represented by the following:

*Traffic light state: GREEN + Current AV velocity: 0 + Pending MP action: velocity =*

*25mph + Is corridor cleared: NO + AV MC action: velocity = 0.*

In an embodiment, a monitor may apply **504** a cryptographic operation to the combination value to generate an encoded combination value. For example, a monitor may apply a SHA-256 cryptographic hash algorithm to a combination value. For instance, applying a SHA-256 cryptographic hash algorithm to the combination value identified above may result in the following encoded combination value:
8992289100b954b6e500416b5402039f8f22b0c5d6d4b421e6516677672362cb.

In the invention, a monitor searches **506** a data store for the encoded combination value and identifies **508** a return code associated with the encoded combination value. The data store may store various encoded combination values and associated return codes. A return code indicates whether the associated encoded combination value is correct or incorrect. If a return code indicates an encoded combination value is incorrect, it may also indicate a priority level. Table 2 illustrates an example data store according to various embodiments.

**Table 2**

| Encoded combination value | Return code |
| --- | --- |
| 8992289100b954b6e500416b5402039f8f22b0c5d6d4b421e 6516677672362cb | PASS_CONTINUE |
| 786cde301484293b196ad0174eff68da6fcfe6f7cf283c21a90 549835100d416 | FAIL_HIGH_PRIORITY _CHECK_STATE |

In the invention, if a monitor identifies a return code indicating that an encoded combination value is incorrect, the monitor generates **510** a fault notification. As discussed above, a fault notification may be an alert, an email or other notification alerting a system user, such as an administrator, that a fault was detected with the execution flow. For example, a local monitor may cause an alert in the form of a graphical user interface element to be displayed to a user via a display device. In another embodiment, generating **510** a fault notification may include causing a system to perform an action or refrain from performing one or more actions. For instance, generating **510** a fault notification may involve halting the operation of an automated device.

If a monitor cannot locate an encoded combination value in a searched data store, the monitor may create a new entry in the data store, add the encoded combination value to the new entry, and prompt a user to provide an associated return code which may be stored in association with the encoded combination value in the data store. As such, the system can scale to address different combinations of parameter values as they are encountered.

In various embodiments, with respect to any of the ways of verifying execution sequence integrity of an execution flow, a local monitor may send or forward information to a global monitor. A global monitor may be associated with one or more local monitors, subsystems or systems, and may be responsible for monitoring and detecting system level faults over a period of time. A global monitor may be in communication with a diagnostics system.

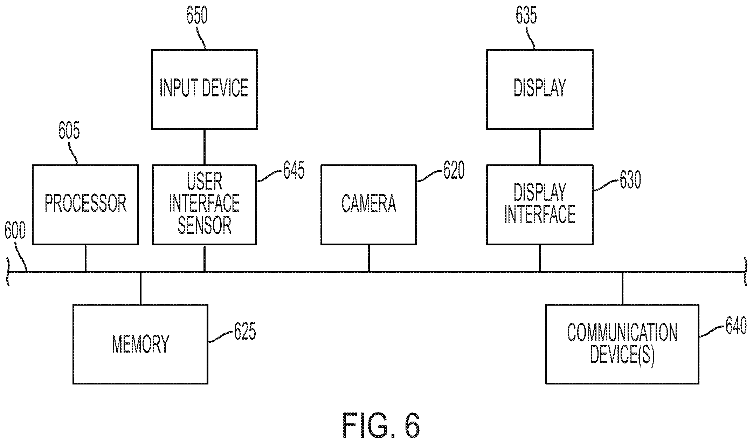

FIG. 6 depicts an example of internal hardware that may be included in any of the electronic components of the system, such as the user's smartphone or a local or remote computing device in the system. An electrical bus **600** serves as an information highway interconnecting the other illustrated components of the hardware. Processor **605** is a central processing device of the system, configured to perform calculations and logic operations required to execute programming instructions. As used in this document and in the claims, the terms "processor" and "processing device" may refer to a single processor or any number of processors in a set of processors that collectively perform a set of operations, such as a central processing unit (CPU), a graphics processing unit (GPU), a remote server, or a combination of these. Read only memory (ROM), random access memory (RAM), flash memory, hard drives and other devices capable of storing electronic data constitute examples of memory devices **625.** A memory device may include a single device or a collection of devices across which data and/or instructions are stored. Various embodiments of the invention may include a computer-readable medium containing programming instructions that are configured to cause one or more processors to perform the functions described in the context of the previous figures.

An optional display interface **630** may permit information from the bus **600** to be displayed on a display device **635** in visual, graphic or alphanumeric format. An audio interface and audio output (such as a speaker) also may be provided. Communication with external devices may occur using various communication devices **640** such as a wireless antenna, an RFID tag and/or short-range or near-field communication transceiver, each of which may optionally communicatively connect with other components of the device via one or more communication system. The communication device(s) **640** may be configured to be communicatively connected to a communications network, such as the Internet, a local area network or a cellular telephone data network.

The hardware may also include a user interface sensor **645** that allows for receipt of data from input devices **650** such as a keyboard, a mouse, a joystick, a touchscreen, a touch pad, a remote control, a pointing device and/or microphone. Digital image frames also may be received from a camera **620** that can capture video and/or still images.

The above-disclosed features and functions, as well as alternatives, may be combined into many other different systems or applications. Various components may be implemented in hardware or software or embedded software. Various presently unforeseen or unanticipated alternatives, modifications, variations or improvements may be made by those skilled in the art, each of which is also intended to be encompassed by the disclosed embodiments.

**Claims**

1.    A method of verifying execution sequence integrity of an execution flow, the method comprising:

receiving, by a monitor (116, 118, 120) of a monitoring system (100), from one or more sensors of an autonomous vehicle being monitored by the monitoring system (100), a parameter value for each of a plurality of parameters in a sequence of an execution flow that represents an operation of the autonomous vehicle, wherein the pa-

EP 3 864 544 B1

rameter value received from the one or more sensors of the autonomous vehicle represents a measurement obtained from the one or more sensors during operation;
combining the received parameter values in an order corresponding to an order of the parameters in the sequence to generate a combination value;
applying a hashing algorithm to the combination value to generate an encoded combination value;
searching a data store for a return code associated with the encoded combination value; and
in response to the return code associated with the encoded combination value indicating that the temporary hash value is incorrect, generating a fault notification.

2. The method of claim 1, wherein combining the received parameter values to generate a combination value comprise concatenating the received parameter values.

3. The method according to any of the preceding claims 1-2, wherein the one or more sensors comprise one or more of the following:

an image sensor;
a radar sensor;
a lidar sensor;
an audio sensor;
an optics sensor;
an inertial measurement unit;
a gyroscope;
an accelerometer; or
a geolocation sensor.

4. The method according to any of the preceding claims 1-3, wherein each parameter value represents a measurement obtained from the one or more sensors during operation of the autonomous vehicle.

5. The method according to any of the preceding claims 1-4, wherein generating a fault notification comprises halting operation of the autonomous vehicle.

6. The method according to any of the preceding claims 1-5, further comprising sending the encoded combination value to a global monitor (128) of the monitoring system (100), wherein the global monitor (128) is configured to monitor all of the sensors of the autonomous vehicle.

7. The method according to any of the preceding claims 1-6, further comprising:
in response to not locating a return code associated with the encoded combination value in the data store:

creating a new entry in the data store for the encoded combination value and an associated return code,
adding the encoded combination value to the new entry,
prompting a user for the associated return code, and
adding the associated return code to the new entry so that it is associated with the encoded combination value in the data store.

8. A system of verifying execution sequence integrity of an execution flow, the system comprising:

a monitoring system (100) in communication with one or more sensors of an autonomous vehicle being monitored by the monitoring system (100), wherein the monitoring system (100) comprises one or more electronic devices;
a computer-readable storage medium comprising one or more programming instructions that, when executed, cause at least one of the electronic devices to:

receive from one or more of the sensors, a parameter value for each of a plurality of parameters in a sequence of an execution flow that represents an operation of the autonomous vehicle, wherein the parameter value received from the one or more sensors of the autonomous vehicle represents a measurement obtained from the one or more sensors during the operation,
combine the received parameter values in an order corresponding to an order of the parameters in a sequence to generate a combination value,
apply a hashing algorithm to the combination value to generate an encoded combination value,

search a data store for a return code associated with the encoded combination value, and
in response to the return code associated with the encoded combination value indicating that the encoded combination value is incorrect, generate a fault notification.

9. The system of claim 8, wherein the one or more programming instructions that, when executed, cause the at least one of the electronic devices to combine the received parameter values to generate a combination value comprise one or more programming instructions that, when executed, cause the at least one of the electronic devices to concatenate the received parameter values.

10. The system according to any of the preceding claims 8-9, wherein the one or more sensors comprise one or more of the following:

an image sensor;
a radar sensor;
a lidar sensor;
an audio sensor;
an optics sensor;
an inertial measurement unit;
a gyroscope;
an accelerometer; or
a geolocation sensor.

11. The system according to any of the preceding claims 8-10, wherein each parameter value represents a measurement obtained from the one or more sensors during operation of the autonomous vehicle.

12. The system according to any of the preceding claims 8-11, wherein the one or more programming instructions that, when executed, cause the at least one of the electronic devices to generate a fault notification comprise one or more programming instructions that, when executed, cause the at least one of the electronic devices to halt operation of the autonomous vehicle.

13. The system according to any of the preceding claims 8-12, wherein the computer-readable storage medium further comprises one or more programming instructions that, when executed, cause the at least one of the electronic devices to send the encoded combination value to a global monitor (128) of the monitoring system (100), wherein the global monitor is configured to monitor all of the sensors of the autonomous vehicle.

**Patentansprüche**

1. Verfahren zum Verifizieren einer Ausführungssequenzintegrität eines Ausführungsablaufs, wobei das Verfahren umfasst:

Empfangen eines Parameterwerts für jeden einer Vielzahl von Parametern in einer Sequenz eines Ausführungsablaufs, der einen Betrieb des autonomen Fahrzeugs darstellt, durch eine Überwachungseinrichtung (116, 118, 120) eines Überwachungssystems (100) von einem oder mehreren Sensoren eines autonomen Fahrzeugs, die durch das Überwachungssystem (100) überwacht werden, wobei der von dem einen oder den mehreren Sensoren des autonomen Fahrzeugs empfangene Parameterwert eine Messung darstellt, die von dem einen oder den mehreren Sensoren während des Betriebs erhalten wird;
Kombinieren der empfangenen Parameterwerte in einer Reihenfolge, die einer Reihenfolge der Parameter in der Sequenz entspricht, um einen Kombinationswert zu erzeugen;
Anwenden eines Hash-Algorithmus auf den Kombinationswert, um einen codierten Kombinationswert zu erzeugen;
Durchsuchen eines Datenspeichers nach einem Rückführungscode, der dem codierten Kombinationswert zugeordnet ist; und
in Reaktion darauf, dass der Rückführungscode, der dem codierten Kombinationswert zugeordnet ist, angibt, dass der vorübergehende Hash-Wert falsch ist, Erzeugen einer Fehlerbenachrichtigung.

2. Verfahren nach Anspruch 1, wobei das Kombinieren der empfangenen Parameterwerte, um einen Kombinationswert zu erzeugen, das Verketten der empfangenen Parameterwerte umfasst.

3. Verfahren nach einem der vorangehenden Ansprüche 1-2, wobei der eine oder die mehreren Sensoren einen oder mehrere der Folgenden umfassen:

> einen Bildsensor;
> einen Radarsensor;
> einen Lidarsensor;
> einen Audiosensor;
> einen Optiksensor;
> eine Trägheitsmesseinheit;
> ein Gyroskop;
> einen Beschleunigungsmesser; oder
> einen Geoortungssensor.

4. Verfahren nach einem der vorangehenden Ansprüche 1-3, wobei jeder Parameterwert eine Messung darstellt, die von dem einen oder den mehreren Sensoren während des Betriebs des autonomen Fahrzeugs erhalten wird.

5. Verfahren nach einem der vorangehenden Ansprüche 1-4, wobei das Erzeugen einer Fehlerbenachrichtigung das Anhalten des Betriebs des autonomen Fahrzeugs umfasst.

6. Verfahren nach einem der vorangehenden Ansprüche 1-5, das ferner das Senden des codierten Kombinationswerts zu einer globalen Überwachungseinrichtung (128) des Überwachungssystems (100) umfasst, wobei die globale Überwachungseinrichtung (128) dazu eingerichtet ist, alle Sensoren des autonomen Fahrzeugs zu überwachen.

7. Verfahren nach einem der vorangehenden Ansprüche 1-6, das ferner umfasst:
in Reaktion darauf, dass kein Rückführungscode, der dem codierten Kombinationswert zugeordnet ist, im Datenspeicher aufgefunden wird:

> Erzeugen eines neuen Eintrags im Datenspeicher für den codierten Kombinationswert und einen zugehörigen Rückführungscode,
> Hinzufügen des codierten Kombinationswerts zum neuen Eintrag,
> Abfragen eines Benutzers nach dem zugehörigen Rückführungscode, und
> Hinzufügen des zugehörigen Rückführungscodes zum neuen Eintrag, so dass er dem codierten Kombinationswert im Datenspeicher zugeordnet ist.

8. System zum Verifizieren einer Ausführungssequenzintegrität eines Ausführungsablaufs, wobei das System umfasst:

> ein Überwachungssystem (100) in Kommunikation mit einem oder mehreren Sensoren eines autonomen Fahrzeugs, die durch das Überwachungssystem (100) überwacht werden, wobei das Überwachungssystem (100) eine oder mehrere elektronische Vorrichtungen umfasst;
> ein computerlesbares Speichermedium mit einer oder mehreren Programmieranweisungen, die, wenn sie ausgeführt werden, bewirken, dass mindestens eine der elektronischen Vorrichtungen:
>
>> von einem oder mehreren der Sensoren einen Parameterwert für jeden von einer Vielzahl von Parametern in einer Sequenz eines Ausführungsablaufs empfängt, der einen Betrieb des autonomen Fahrzeugs darstellt, wobei der von dem einen oder den mehreren Sensoren des autonomen Fahrzeugs empfangene Parameterwert eine Messung darstellt, die von dem einen oder den mehreren Sensoren während des Betriebs erhalten wird,
>> die empfangenen Parameterwerte in einer Reihenfolge kombiniert, die einer Reihenfolge der Parameter in einer Sequenz entspricht, um einen Kombinationswert zu erzeugen,
>> einen Hash-Algorithmus auf den Kombinationswert anwendet, um einen codierten Kombinationswert zu erzeugen,
>> einen Datenspeicher nach einem Rückführungscode durchsucht, der dem codierten Kombinationswert zugeordnet ist, und
>> in Reaktion darauf, dass der Rückführungscode, der dem codierten Kombinationswert zugeordnet ist, angibt, dass der codierte Kombinationswert falsch ist, eine Fehlerbenachrichtigung erzeugt.

9. System nach Anspruch 8, wobei die eine oder die mehreren Programmieranweisungen, die, wenn sie ausgeführt werden, bewirken, dass die mindestens eine der elektronischen Vorrichtungen die empfangenen Parameterwerte kombiniert, um einen Kombinationswert zu erzeugen, eine oder mehrere Programmieranweisungen umfassen, die, wenn sie ausgeführt werden, bewirken, dass die mindestens eine der elektronischen Vorrichtungen die empfangenen Parameterwerte verkettet.

10. System nach einem der vorangehenden Ansprüche 8-9, wobei der eine oder die mehreren Sensoren einen oder mehrere der Folgenden umfassen:

einen Bildsensor;
einen Radarsensor;
einen Lidarsensor;
einen Audiosensor;
einen Optiksensor;
eine Trägheitsmesseinheit;
ein Gyroskop;
einen Beschleunigungsmesser; oder
einen Geoortungssensor.

11. System nach einem der vorangehenden Ansprüche 8-10, wobei jeder Parameterwert eine Messung darstellt, die von dem einen oder den mehreren Sensoren während des Betriebs des autonomen Fahrzeug erhalten wird.

12. System nach einem der vorangehenden Ansprüche 8-11, wobei die eine oder die mehreren Programmieranweisungen, die, wenn sie ausgeführt werden, bewirken, dass die mindestens eine der elektronischen Vorrichtungen eine Fehlerbenachrichtigung erzeugt, eine oder mehrere Programmieranweisungen umfassen, die, wenn sie ausgeführt werden, bewirken, dass die mindestens eine der elektronischen Vorrichtungen den Betrieb des autonomen Fahrzeugs anhält.

13. System nach einem der vorangehenden Ansprüche 8-12, wobei das computerlesbare Speichermedium ferner eine oder mehrere Programmieranweisungen umfasst, die, wenn sie ausgeführt werden, bewirken, dass die mindestens eine der elektronischen Vorrichtungen den codierten Kombinationswert zu einer globalen Überwachungseinrichtung (128) des Überwachungssystems (100) sendet, wobei die globale Überwachungseinrichtung dazu eingerichtet ist, alle Sensoren des autonomen Fahrzeugs zu überwachen.

**Revendications**

1. Procédé de vérification d'intégrité d'une séquence d'exécution d'un flux d'exécution, le procédé comportant :

recevoir, par un moniteur (116, 118, 120) d'un système de surveillance (100), à partir d'un ou plusieurs capteurs d'un véhicule autonome étant surveillé par le système de surveillance (100), une valeur de paramètre pour chaque paramètre d'une pluralité de paramètres dans une séquence d'un flux d'exécution qui représente un fonctionnement du véhicule autonome, dans lequel la valeur de paramètre reçue du ou des capteurs du véhicule autonome représente une mesure obtenue à partir du ou des capteurs pendant le fonctionnement ;
combiner les valeurs de paramètres reçues dans un ordre correspondant à un ordre des paramètres dans la séquence pour générer une valeur de combinaison ;
appliquer un algorithme de hachage à la valeur de combinaison pour générer une valeur de combinaison codée ;
rechercher dans un dépôt de données un code de retour associé à la valeur de combinaison codée ; et
en réponse au code de retour associé à la valeur de combinaison codée indiquant que la valeur de hachage temporaire est incorrecte, générer une notification de défaut.

2. Procédé selon la revendication 1, dans lequel la combinaison des valeurs de paramètres reçues pour générer une valeur de combinaison comporte la concaténation des valeurs de paramètres reçues.

3. Procédé selon l'une quelconque des revendications 1 à 2 précédentes, dans lequel le ou les capteurs comportent un ou plusieurs des éléments suivants :

un capteur d'image ;
un capteur radar ;
un capteur lidar ;

un capteur audio ;
un capteur optique ;
une unité de mesure inertielle ;
un gyroscope ;
un accéléromètre ; ou
un capteur de géolocalisation.

4. Procédé selon l'une quelconque des revendications 1 à 3 précédentes, dans lequel chaque valeur de paramètre représente une mesure obtenue à partir du ou des capteurs pendant le fonctionnement du véhicule autonome.

5. Procédé selon l'une quelconque des revendications 1 à 4 précédentes, dans lequel la génération d'une notification de défaut comporte l'arrêt du fonctionnement du véhicule autonome.

6. Procédé selon l'une quelconque des revendications 1 à 5 précédentes, comportant en outre l'envoi de la valeur de combinaison codée à un moniteur global (128) du système de surveillance (100), dans lequel le moniteur global (128) est configuré pour surveiller la totalité des capteurs du véhicule autonome.

7. Procédé selon l'une quelconque des revendications 1- 6 précédentes, comportant en outre :
en réponse à la non-localisation d'un code de retour associé à la valeur de combinaison codée dans le dépôt de données :

créer une nouvelle entrée dans le dépôt de données pour la valeur de combinaison codée et un code de retour associé,
ajouter la valeur de combinaison codée à la nouvelle entrée,
demander à un utilisateur le code de retour associé, et
ajouter le code de retour associé à la nouvelle entrée de sorte qu'il est associé à la valeur de combinaison codée dans le dépôt de données.

8. Système de vérification d'intégrité d'une séquence d'exécution d'un flux d'exécution, le système comportant :

un système de surveillance (100) en communication avec un ou plusieurs capteurs d'un véhicule autonome étant surveillé par le système de surveillance (100), dans lequel le système de surveillance (100) comporte un ou plusieurs dispositifs électroniques ;
un support de stockage lisible par ordinateur comportant une ou plusieurs instructions de programmation qui, lorsqu'elles sont exécutées, amènent au moins un des dispositifs électroniques à :

recevoir, à partir d'un ou plusieurs des capteurs, une valeur de paramètre pour chaque paramètre d'une pluralité de paramètres dans une séquence d'un flux d'exécution qui représente un fonctionnement du véhicule autonome, dans lequel la valeur de paramètre reçue du ou des capteurs du véhicule autonome représente une mesure obtenue à partir du ou des capteurs pendant le fonctionnement,
combiner les valeurs de paramètres reçues dans un ordre correspondant à un ordre des paramètres dans une séquence pour générer une valeur de combinaison,
appliquer un algorithme de hachage à la valeur de combinaison pour générer une valeur de combinaison codée,
rechercher dans un dépôt de données un code de retour associé à la valeur de combinaison codée, et
en réponse au code de retour associé à la valeur de combinaison codée indiquant que la valeur de combinaison codée est incorrecte, générer une notification de défaut.

9. Système selon la revendication 8, dans lequel la ou les instructions de programmation qui, lorsqu'elles sont exécutées, amènent le au moins un des dispositifs électroniques à combiner les valeurs de paramètres reçues pour générer une valeur de combinaison comportent une ou plusieurs instructions de programmation qui, lorsqu'elles sont exécutées, amènent le au moins un des dispositifs électroniques à concaténer les valeurs de paramètres reçues.

10. Système selon l'une quelconque des revendications 8 à 9 précédentes, dans lequel le ou les capteurs comportent un ou plusieurs des éléments suivants :

un capteur d'image ;
un capteur radar ;

un capteur lidar ;
un capteur audio ;
un capteur optique ;
une unité de mesure inertielle ;
un gyroscope ;
un accéléromètre ; ou
un capteur de géolocalisation.

11. Système selon l'une quelconque des revendications 8 à 10 précédentes, dans lequel chaque valeur de paramètre représente une mesure obtenue à partir du ou des capteurs pendant le fonctionnement du véhicule autonome.

12. Système selon l'une quelconque des revendications 8 à 11 précédentes, dans lequel la ou les instructions de programmation qui, lorsqu'elles sont exécutées, amènent le au moins un des dispositifs électroniques à générer une notification de défaut comportent une ou plusieurs instructions de programmation qui, lorsqu'elles sont exécutées, amènent le au moins un des dispositifs électroniques à arrêter le fonctionnement du véhicule autonome.

13. Système selon l'une quelconque des revendications 8 à 12 précédentes, dans lequel le support de stockage lisible par ordinateur comporte en outre une ou plusieurs instructions de programmation qui, lorsqu'elles sont exécutées, amènent le au moins un des dispositifs électroniques à envoyer la valeur de combinaison codée à un moniteur global (128) du système de surveillance (100), dans lequel le moniteur global est configuré pour surveiller tous les capteurs du véhicule autonome.

FIG. 1

EP 3 864 544 B1

EP 3 864 544 B1

FIG. 2

FIG. 3

FIG. 4

EP 3 864 544 B1

RECEIVE PARAMETER VALUES —500

COMBINE PARAMETER VALUES TO GENERATE COMBINATION VALUE —502

APPLY CRYPTOGRAPHIC OPERATION TO COMBINATION VALUE —504

SEARCH FOR ENCODED COMBINATION VALUE —506

IDENTIFY RETURN CODE —508

GENERATE FAULT NOTIFICATION —510

FIG. 5

FIG. 6

## REFERENCES CITED IN THE DESCRIPTION

### Patent documents cited in the description

- US 15519918
- US 15522918
- US 2013080843 A1
- US 2011047200 A1
- US 2008215920 A1
- FR 2841015 A1

### Non-patent literature cited in the description

- **LARDENNOIS R ED - PLTLKA ANDREZEJ et al.** Using Modula-2 for safety-critical control in an urban transportation system. *Microprocessors and microsystems,* 01 April 1990, vol. 14 (3), 177-180